(19) Europäisches Patentamt

European Patent Office

Office européen des brevets

(11) Publication number: **0 236 537 B1**

(12) **EUROPEAN PATENT SPECIFICATION**

(45) Date of publication of patent specification: **29.01.92** (51) Int. Cl.⁵: **B25B 11/00**

(21) Application number: **86107962.2**

(22) Date of filing: **11.06.86**

(54) **Eccentric clamps.**

(30) Priority: **10.03.86 US 838092**

(43) Date of publication of application:
**16.09.87 Bulletin 87/38**

(45) Publication of the grant of the patent:
**29.01.92 Bulletin 92/05**

(84) Designated Contracting States:
**CH DE FR GB IT LI**

(56) References cited:
**EP-A- 0 076 096**
**DE-B- 1 132 060**
**US-A- 2 430 613**
**US-A- 4 139 188**

(73) Proprietor: **Bishop, Maurice E.**
**Moultonville Road**
**Center Ossipee New Hampshire 03814(US)**

(72) Inventor: **Bishop, Maurice E.**
**Moultonville Road**
**Center Ossipee New Hampshire 03814(US)**

(74) Representative: **Finck, Dieter et al**
**Patentanwälte v. Füner, Ebbinghaus, Finck**
**Mariahilfplatz 2 & 3**
**W-8000 München 90(DE)**

Rank Xerox (UK) Business Services

## Description

The invention relates to an orbital action clamp having a first clamping part which rotates about an axis and has a portion comprising an external bearing surface positioned to transmit rotational force to an inner peripheral bearing surface of a second clamping part, said inner bearing surface of said second clamping part being fitted for relative angular motion about said external bearing surface of said first clamping part, said portion comprising said external bearing surface being eccentric with respect to the axis of rotation of said first clamping part, said first clamping part comprising an end adapted to be supported within an accomodating recess in a mount, said end being angulary adjustable about said axis in relation to said mount, said external bearing surface of said first clamping part being positioned on said first clamping part away from said end and disposed outwardly above said recess when said end is inserted therein, said second clamping part comprising at least one workpiece-engaging face displaced laterally outwardly away from said inner bearing surface, and the maximum distance between a workpiece to be held and the workpiece-engaging face of said second clamping part not exceeding twice the lateral offset between said axis and the central axis of said portion comprising said external bearing surface.

Such an orbital action clamp is known from the DE-AS 1 132 060. This orbital action clamp is designed for clamping an apparatus to the edge of a table and comprises a turning crank and a shaft accomodated in a bore provided in a part being integral with the apparatus. The crank and the shaft cause a cam to turn as friction is applied by a spring disposed between a disk attached to the shaft and the inner bearing surface of the cam. This clamp is not convenient for holding a workpiece on a machining table, because it is bulky and would interfere with other clamps and with the machine in operation.

The problem underlying the invention is to provide a compact orbital action clamp having low height and small size which can be operated from a location near its workpiece engaging parts.

Starting out from the orbital action clamp of the generic kind this problem is solved in that the end of said first clamping part is the lower end threaded for insertion in a reciprocally threaded portion of said recess, said inner bearing surface of said second clamping part is closely fitted about said external bearing surface of said first clamping part, a thin shoulder having an inner diameter less than the diameter of said bearing surfaces, but slightly in excess of the sum of the diameter of said threaded lower end of the first clamping part plus said lateral offset, is provided at the bottom of the bore of said second clamping part, by which the inner bearing surface is formed, to prevent separation of said first and said second clamping parts when they are mated together with said lower end of said first clamping part supported in a mount, and to accomodate movement of said second clamping part without jamming, either said external bearing surface or said inner bearing surface, or both, comprising a surface of revolution substantially concentric with said central axis of said portion comprising said external bearing surface, and said first clamping part further comprising surfaces shaped and disposed to fit cooperatively and releasably with a torque-applying tool, to respond to angular movement of the tool by angulary adjusting the orientation of said external bearing surface of said first clamping part.

The orbital action clamp of the invention is compact and has a low height and a small size. It can be operated from a location near its workpiece engaging parts. Therefore it is extremely useful for holding multiple parts in a tight space, such as workpieces that are machined by computer operated robotic equipment. The clamping action is extremely sure. There is no interference from the clamp on the top of the workpiece.

Preferably said surface of revolution is of substantially truncated conical configuration and tapers from larger to smaller diameter in direction downwardly along said axis of rotation, whereby said second clamping part is prevented from separating from said first clamping part when they are mated together with said first clamping part supported in the mount.

In a preferred embodiment said lower end of said first clamping part is externally threaded for support within a tapped opening in the mount, and said lower end is integral with and of smaller diameter than said eccentric portion of said first clamping part.

Advantageously the upper end of the eccentric portion comprises a hex-socket shaped to receive an Allen wrench.

Conveniently said first clamping part comprises a hex-socket button-head cap screw from the head of which material has beeen removed to form said eccentric portion.

In another preferred embodiment said lower end of said first clamping part is fixed with and angularly adjustable about said axis of rotation in relation to a T-nut which is slidable within and locks with a T-slot of a mount in the form of a T-slotted machine table.

In the following embodiments of the invention are explained by means of drawings, wherein:

FIG. 1 is an "exploded" pictorial and partly sectioned representation of components of an improved orbital-action clamp and a portion of an associated mount;

FIG. 2 is a top plan view of the bolt-like portion of the same clamp, together with a dashed-line representation of an outline of material removed from the head of a button-head cap screw from which that portion is fashioned;

FIG. 3 is a side elevational view of that same bolt-like portion, together with a dashed-line outline characterizing material removed from a button-head cop screw to form an eccentric offset through which orbital motion may be derived;

FIG. 4 is a cross-section side view of the nut-like portion of the same clamp;

FIG. 5 provides a top plan view of a clamping arrangement like that of FIG. 1, together with dashed linework characterizing orbital-motion displacement of the nut-like clamp portion thereof;

FIG. 6 is a bottom plan view of the united bolt-like and nut-like portions of the same clamp;

FIG. 7 illustrates pictorially, and partly in cross-section, an assembly of the same clamp and mount in association with a clamped workpiece and an adjustment wrench;

FIG. 8 portrays a number of such clamps mounted on a platen carrying several workpieces;

FIG. 9 represents an improved clamp holding a workpiece by way of a T-shaped block locked within a T-slotted work table of a machine tool;

FIG. 10 depicts a modification of a bolt-like portion of the clamp allowing its turning by a screwdriver-type implement;

FIG. 11 presents a side view of an alternative bolt-like clamp portion with a tapered eccentric offset and of a cross-sectioned cooperating tapered-bore nut-like clamp portion;

FIG. 12 provides a cross-section of an assembled taper-to-taper orbital clamp arrangement, in which the orbiting clamp member is in the form of an angle bracket; and

FIG. 13 is a top plan view of an orbital-motion clamp member having side surfaces of a number of different configurations lending themselves to cooperating uses with workpieces of various shapes.

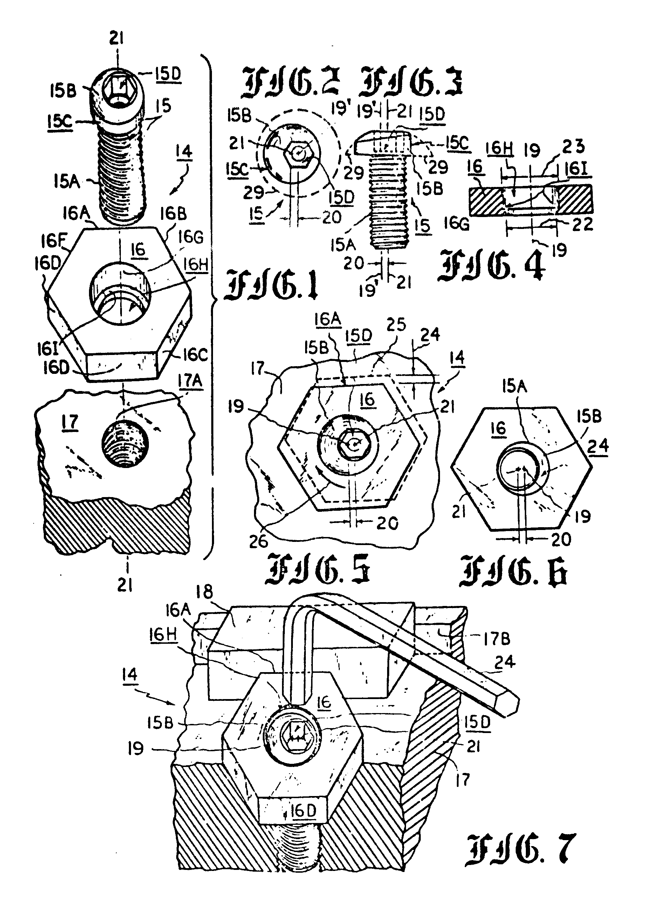

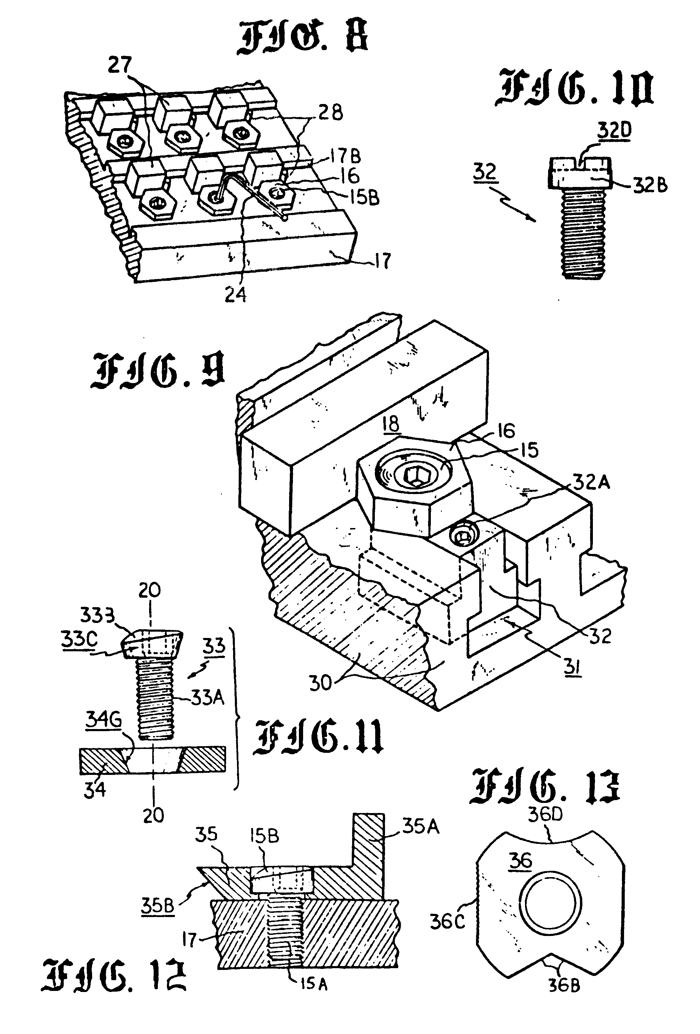

Having reference to the drawings, wherein like reference characters designate identical or corresponding parts throughout the different views, and more particularly to FIGS. 1 and 7 thereof, one embodiment of an improved orbital-action clamping arrangement, 14, is shown to include a bolt-like portion 15 and a cooperating nut-like orbital clamp member 16, both of which are assembled atop a mounting platen 17 by way of a tapped hole 17A accommodating the externally-threaded lower end 15A of the bolt-like portion of the clamp. The illustrated shallow clamp member 16, which is to undergo orbiting to effect clamping and release of a workpiece such as 18(FIG. 7), has six symmetrical sides or "flats" 16A-16F which impart to it the appearance of a hexagonal machine nut. For the purposes under discussion, there may be more or fewer sides, or such flat sides may have another shape, but, in any event, they should be capable of engaging a workpiece of some accommodating shape and, upon doing so, should restrain the clamp member from rotating about its own central axis 19 - 19 (FIGS. 4, 5, 6 and 7) and thereby cause it to orbit instead under influence of the eccentrically-offset upper end 15B of the cooperating bolt-like member 15. That upper end has an essentially cylindrical periphery 15C whose central longitudinal axis 19' - 19' is laterally offset by a small amount, 20(FIGS. 2, 3, 5 and 6), from the parallel longitudinal axis 21 - 21 of the threaded lower end of member 15. Cylindrical periphery 15C serves as a crankshaft bearing outer surface for the closely-fitting inner bearing surface 16G of the shallow nut-like clamp member 16, the latter surface being formed by a cylindrical bore 16H centered along axis 19 - 19. A thin shoulder 16I(FIGS. 1 and 4) is left at the bottom of the bore, its inner diameter 22 (FIG. 4) being less than the diameter 23 of the crankshaft bearing surfaces 15C and 16G but slightly in excess of the sum of the diameter of the threaded lower end of member 15 plus the aforementioned lateral offset 20. As is evident from the showing in FIG. 6, that excess leaves needed space, such as 24, which will accommodate orbital movement of member 16 around member 15 without any jamming against its lower end 15A.

When cooperating clamp members 16 and 15 are fully mated, with the eccentric upper end 15B nested within the bore 16H, the axes 19 - 19 and 19'- 19' coincide and the clamp member 16 is necessarily offset in an eccentric relation to the central longitudinal axis 21 - 21 of member 15; that eccentric relation is preserved when the threaded lower end 15A is screwed into the tapped hole 17A of the mount 17. Importantly, the bolt-like member is not left fully tightened in the tapped hole of the mount, but is instead backed off by about one or one-and-a-half turns, such that the nut-like clamp member 16 will not be jammed immovably against the platen 17. In the embodiment under discussion, the upper end 15B of the bolt-like member has a conventional form of hex socket, 15D, into which a common Allen wrench 24 (FIG. 7) may be inserted to effect turning of member 15, with resulting orbital clamping movement of member 16. About a quarter turn can move one of the clamp flats, such as 16A(FIG. 5), laterally by a distance, 24, about the same as the aforesaid offset amount 20, as is indicated by the dashed linework 25 representing the clockwise non-rotating orbital shift of member 16 as the bolt-like eccentric part 15B is rotated a quarter turn in the direction of arrow 26 about axis 21. A maximum lateral orbiting shift twice that amount can be realized through a mere full half turn of the bolt-like member 15. FIG. 7 shows how that clamping assembly can be used to lock a workpiece 18 in place on a mount 17, the clamp flat or face 16A being engaged with and securely holding that workpiece against at least one fixed mechanical stop surface 17B. Clamping and release of workpieces in a set-up can occur quickly with a simple partial turn of an inserted wrench 24, and the unusually shallow height of the clamping assembly avoids any obstruction of or interference with a machine tool as it engages or passes over the workpieces. A compact multiple-workpiece arrangement, such as is common for economic automatic machining, and which derives special advantage from the small size and low profile and quick-action clamping and release, appears in FIG. 7, where each of the clamps is like that already described and where the several workpieces 27 are further located by stop pins 28.

One convenient low-cost practice for the fabrication of the bolt-like member 15 with an eccentrically-offset upper end 15B involves the special machining of a commercially-available button head cap screw, such as one of treated steel, already having a useful hex socket in its rounded cap, as well as an externally-threaded stem below. The caps of such screws originally have an outline such as is represented by dashed linework 29 in FIGS. 2 and 3, and, for present purposes, the material extending laterally beyond the desired eccentric cylindrical bearing surface 15C is simply removed by machining. Nut-like clamp member 16 is preferably of a less hard material, such as brass, and is thus less likely to mar a workpiece or inadvertently damage an expensive tool; its fabrication likewise requires but relatively simple machining.

For some applications, the removable clamping arrangement may itself use fully incorporate a special mounting element, rather than being fitted with a tapped hole in a mounting platen. Such an array is depicted in FIG. 9, where the earlier-described form of bolt-like member, 15, and nut-like clamp member, 16, are associated with a workpiece-mount in the form of a T-slotted table 30, that known type of table having a slot 31 in the shape of an inverted "T". An associated T-shaped "nut" member 32, which fits well within the correspondingly-shaped slot 31, is used to mount the clap members on the table, that nut member being equipped with a set screw 32A which, when tightened, pushes the nut member into a tightened and locked position. With the nut member located and locked in a desired place on the table, the orbital clamp member 16 may then be wrench-adjusted via the cooperating member 15 to quickly clamp or release a workpiece 18.

The FIG. 10 modification of the bolt-like clamp member 15 to another form, 32, involves a slotted eccentric cap 32B rather than the hex-socketed cap shown in the earlier Figures, the slotting 32D there allowing for acceptance of a screwdriver. It may be turned from a conventional or Phillips-head type screw, for example.

In the FIG. 11 construction, the bolt member 33 is also generally like member 15 but has an eccentric offset hex-socket upper end or cap 33B which differs from what appears in FIGS. 1-3, 5 and 6 in that its periphery 33C, though a surface of revolution about the eccentric axis 20 - 20, is of downwardly-tapering truncated conical form rather than cylindrical. In turn, that allows the cooperating nut-like clamp member 34, which like member 16 has one or more peripheral "flats" or other workpiece-engaging side surfaces (not shown in FIG. 11), to be fashioned without any lower retaining shoulder such as the annular shoulder 16I(FIG. 1). Instead, its inner bearing surface 34G, which mates closely with the "crankshaft" outer bearing surface 33C, needs merely be correspondingly tapered, as shown, and it will be retained without likelihood of being accidentally dislodged once the bolt threaded end 33A has been engaged within a suitable mounting plate, T-nut, or the like. As with the earlier-described assembly, full tightening is avoided.

FIG. 12 shows how the nut-like clamping member, there numbered 35, may be modified to suit special purposes; for example, one face is part of an angle-bracket portion 35A, and another, 35B, is at a radially shorter distance and has a downward slope which can aid in holding a thin workpiece down upon the mount, 17. Other workpiece-engaging faces which may also serve particular needs are illustrated in association with another clamp member 36, in FIG. 13; that member will be recognized as generally like member 16, except that has side surfaces which include notching, 36B, and serration-like roughening, 36C, and concave curvature, 36D. Various ones of the work-engaging features of the clamp members of FIGS. 12 and 13 may of course be used alone, or repeated, or combined.

Plastic, or metals other than those named, may be substituted in either or both clamping members, as may be appropriate to intended uses. Although preferred constructions involve mechanical interlocking between the bolt-like and nut-like clamp members, by way of provisions such as the retaining shoulder or taper-to-taper fit which have been described, it may be expedient in some instances to allow the nut-like clamp member to remain removable and replaceable with one of another shape or size without fully unscrewing the cooperating threaded bolt-like member; magnetic attraction or snap-fitting may hold the nut-like member to the mount, and/or to the bolt-like member, to avoid unwanted separations during set-up, for example. More than one clamping assembly may of course be used to secure a workpiece, in a vise-like, chuck-like or other array. Although the use of additional parts is not currently preferred, similar operating results can be realized with an assembly in which the needed eccentric offset is provided by a separate part keyed eccentrically to the upper end of an otherwise symmetrical bolt. The bolt-like member may in some cases be locked in place, once clamping has been brought about.

**Claims**

1. Orbital action clamp having a first clamping part (15) which rotates about an axis (21) and has a portion comprising an external bearing surface (15C) positioned to transmit rotational force to an inner peripheral bearing surface (16G) of a second clamping part (16),

said inner bearing surface (16G) of said second clamping part (16) being fitted for relative angular motion about said external bearing surface (15C) of said first clamping part (15),

said portion comprising said external bearing surface (15C) being eccentric with respect to the axis (21) of rotation of said first clamping part (15),

said first clamping part (15) comprising an end (15A) adapted to be supported within an accomodating recess (17A) in a mount (17), said end (15A) being angulary adjustable about said axis (21) in relation to said mount (17),

said external bearing surface (15C) of said first clamping part (15) being positioned on said first clamping part (15) away from said end (15A) and disposed outwardly above said recess (17A) when said end (15A) is inserted therein,

said second clamping part (16) comprising at least one workpiece-engaging face displaced laterally outwardly away from said inner bearing surface (16G), and

the maximum distance (24) between a workpiece to be held and the workpiece-engaging face (16D) of said second clamping part (16) not exceeding twice the lateral offset (20) between said axis (21) and the central axis (19) of said portion comprising said external bearing surface (15C),

characterised in that

the end (15A) of said first clamping part (15) is the lower end (15A) threaded for insertion in a reciprocally threaded portion of said recess (17A),

said inner bearing surface (16G) of said second clamping part (16) is closely fitted about said external bearing surface (15C) of said first clamping part (15),

a thin shoulder (16I) having an inner diameter less than the diameter of said bearing surfaces (15C, 16G), but slightly in excess of the sum of the diameter of said threaded lower end of the first clamping part (15) plus said lateral offset, is provided at the bottom of the bore of said second clamping part (16), by which the inner bearing surface is formed, to prevent separation of said first and said second clamping parts (15, 16) when they are mated together with said lower end (15A) of said first clamping part (15) supported in a mount (17), and to accomodate movement of said second clamping part (16) without jamming,

either said external bearing surface (15C) or said inner bearing surface (16G), or both, comprising a surface of revolution substantially concentric with said central axis (19) of said portion comprising said external bearing surface (15C), and

said first clamping part (15) further comprising surfaces (15D) shaped and disposed to fit cooperatively and releasably with a torque-applying tool, to respond to angular movement of the tool by angulary adjusting the orientation of said external bearing surface (15C) of said first clamping part (15).

2. An orbital action clamp as set forth in claim 1 wherein said surface of revolution (33C) is of substantially truncated conical configuration and tapers from larger to smaller diameter in direction downwardly along said axis (21) of rotation, whereby said second clamping part (16) is prevented from separating from said first clamping part (15) when they are mated together with said first clamping part (15) supported in the mount (17).

3. An orbital action clamp as set forth in claim 1 wherein said lower end (15A) of said first clamping part (15) is externally threaded for support within a tapped opening (17A) in the mount (17), and said lower end (15A) is integral with and of smaller diameter than said eccentric portion (15B) of said first clamping part (15).

4. An orbital action clamp as set forth in claim 1 wherein the upper end of the eccentric portion (15B) comprises a hex-socket (33B) shaped to receive an Allen wrench.

5. An orbital action clamp as set forth in claim 4 wherein said first clamping part (15) comprises a hex-socket button-head cap screw (33B) from the head of which material has beeen removed to form said eccentric portion (15B).

6. An orbital action clamp as set forth in claim 1 wherein said lower end (15A) of said first clamping part (15) is fixed with and angularly adjustable about said axis of rotation (21) in relation to a T-nut (32) which is slidable within and locks with a T-slot (31) of a mount in the form of a T-slotted machine table.

**Revendications**

1. Dispositif de serrage à effet orbital présentant une première pièce de serrage (15) qui tourne autour d'un axe (21) et présente une partie comprenant une surface d'appui extérieure (15C) positionnée de manière à transmettre la force de rotation à une surface d'appui périphérique intérieure (16G) d'une seconde pièce de serrage (16),
ladite surface d'appui intérieure (16G) de ladite seconde pièce de serrage (16) étant montée de manière à pouvoir effectuer un mouvement angulaire relatif par rapport à ladite surface d'appui extérieure (15C) de ladite première pièce de serrage (15),
ladite partie comprenant ladite surface d'appui extérieure (15C) étant excentrique par rapport à l'axe (21) de rotation de ladite première pièce de serrage (15),
ladite première pièce de serrage (15) comprenant une extrémité (15A) adaptée pour être supportée dans un évidement de logement (17A) dans une pièce de montage (17), ladite extrémité (15A) étant réglable angulairement autour dudit axe (21) par rapport à ladite pièce de montage (17),
ladite surface d'appui extérieure (15C) de ladite première pièce de serrage (15) étant, sur ladite première pièce de serrage (15), en position éloignée de ladite extrémité (15A), et disposée vers l'extérieur au-dessus dudit évidement (17A) lorsque ladite extrémité (15A) est introduite dans celui-ci,
ladite seconde pièce de serrage (16) comprenant au moins une face d'appui contre la pièce à usiner, déplaçable latéralement vers l'extérieur en s'éloignant de ladite surface d'appui intérieure (16G), et
la distance (24) maximale entre une pièce à usiner à maintenir et la face (16D) d'appui contre la pièce à usiner de ladite seconde pièce de serrage (16) n'excédant pas deux fois le décalage latéral (20) entre ledit axe (21) et l'axe central (19) de ladite partie comprenant ladite surface d'appui extérieure (15C),
caractérisé en ce que
l'extrémité (15A) de ladite première pièce de serrage (15) est l'extrémité (15A) inférieure filetée pour être introduite dans une partie filetée correspondante dudit évidement (17A),
ladite surface d'appui intérieure (16G) de ladite seconde pièce de serrage (16) est étroitement ajustée sur ladite surface d'appui extérieure (15C) de ladite première pièce de serrage (15),
un fin épaulement (16I) ayant un diamètre intérieur inférieur au diamètre desdites surfaces d'appui (15C, 16G), mais légèrement supérieur à la somme du diamètre de ladite extrémité inférieure filetée de la première pièce de serrage (15) et dudit décalage latéral, est prévu au fond de l'alésage de ladite seconde pièce de serrage (16), lequel forme la surface d'appui intérieure, afin d'empêcher la séparation desdites première et seconde pièces de serrage (15, 16) lorsqu'elles sont montées ensemble sur ladite extrémité inférieure (15A) de ladite première pièce de serrage (15) supportée dans une pièce de montage (17) et pour adapter le déplacement de ladite seconde pièce de serrage (16) sans coincement,
soit ladite surface d'appui extérieure (15C), soit ladite surface d'appui intérieure (16G), soit les deux, comprenant une surface de rotation sensiblement concentrique audit axe central (19) de ladite partie comprenant ladite surface d'appui extérieure (15C), et
ladite première pièce de serrage (15) comprenant, par ailleurs, des surfaces (15D) façonnées et disposées de manière à s'adapter pour coopérer avec et se dégager d'un outil d'application de couple, afin de répondre au déplacement angulaire de l'outil par un réglage angulaire de l'orientation de ladite surface d'appui extérieure (15C) de ladite première pièce de serrage (15).

2. Dispositif de serrage à effet orbital suivant la revendication 1, dans lequel ladite surface de rotation (33C) est de forme sensiblement tronconique qui s'effile d'un diamètre plus grand jusqu'à un diamètre plus petit en descendant le long dudit axe de rotation (21), empêchant ainsi ladite seconde pièce de serrage (16) de se séparer de ladite première pièce de serrage (15) lorsqu'elles sont montées ensemble, ladite première pièce de serrage (15) étant supportée dans la pièce de montage (17).

3. Dispositif de serrage à effet orbital suivant la revendication 1, dans lequel ladite extrémité inférieure (15A) de ladite première pièce de serrage (15) est filetée extérieurement pour être supportée dans une ouverture taraudée (17A) dans la pièce de montage (17), et ladite extrémité inférieure (15A) est solidaire, et d'un diamètre inférieur à celui, de ladite partie excentrique (15B) de ladite première pièce de serrage (15).

4. Dispositif de serrage à effet orbital suivant la revendication 1, dans lequel l'extrémité supérieure de la partie excentrique (15B) comprend une douille à six pans creux (33B) façonnée pour recevoir une clef Allen.

5. Dispositif de serrage à effet orbital suivant la revendication 4, dans lequel ladite première pièce de serrage (15) comprend une vis à tête ronde avec douille à six pans creux (33B), de la tête de laquelle a été enlevée de la matière pour former ladite partie excentrique (15B).

6. Dispositif de serrage à effet orbital suivant la revendication 1, dans lequel ladite extrémité inférieure de ladite première pièce de serrage (15) est fixée selon l'axe de rotation (21) et angulairement réglable par rapport à celui-ci sur un écrou en T (32) qui est coulissable, et se bloque, dans une rainure en T (31) aménagée dans le plateau de montage d'une machine à rainure en T.

**Patentansprüche**

1. Klemme mit Orbitalfunktion, die ein erstes Klemmenteil (15) hat, das sich um eine Achse (21) dreht und einen Abschnitt hat, der eine äußere Lageroberfläche (15C) aufweist, die so positioniert ist, daß sie Drehkraft an eine innere Umfangslageroberfläche (16G) eines zweiten Klemmenteils (16) überträgt,
   - wobei die innere Lageroberfläche (16G) des zweiten Klemmenteils (16) für eine relative Winkelbewegung um die äußere Lageroberfläche (15C) des ersten Klemmenteils (15) angebracht ist,
   - wobei der Abschnitt, der die externe Lageroberfläche (15C) aufweist, bezüglich der Drehachse (21) des ersten Klemmenteils (15) exzentrisch ist,
   - wobei das erste Klemmenteil (15) ein Ende (15A) aufweist, das für eine Halterung in einer Aufnahmeaussparung (17A) in einer Fassung (17) geeignet und um die Achse (21) bezüglich der Fassung (17) im Winkel verstellbar ist,
   - wobei die äußere Lageroberfläche (15C) des ersten Klemmenteils (15) auf dem ersten Klemmenteil (15) von dem Ende (15A) weg positioniert und über der Aussparung (17A) nach außen angeordnet ist, wenn das Ende (15A) darin eingesetzt ist,
   - wobei das zweite Klemmenteil (16) wenigstens eine mit einem Werkstück in Eingriff stehende Fläche aufweist, die seitlich nach außen von der inneren Lageroberfläche (16G) weg verschoben ist, und
   - wobei der maximale Abstand (24) zwischen dem zu haltenden Werkstück und der mit einem Werkstück in Eingriff stehenden Fläche (16D) des zweiten Klemmenteils (16) das Zweifache der seitlichen Versetzung (20) zwischen der Achse (21) und der Mittelachse (19) des die äußere Lageroberfläche (15C) aufweisenden Abschnitts nicht überschreitet, dadurch gekennzeichnet,
   - daß das Ende (15A) des ersten Klemmenteils (15) das untere Ende (15A) ist, das für den Einsatz in einen Gegengewindeabschnitt der Aussparung (17A) mit einem Gewinde versehen ist,
   - daß die innere Lageroberfläche (16G) des zweiten Klemmenteils (16) um die äußere Lageroberfläche (15C) des ersten Klemmenteils (15) herum mit Feinpassung angeordnet ist,
   - daß eine dünne Schulter (16I) mit einem inneren Durchmesser, der kleiner als der Durchmesser der Lageroberflächen (15C, 16G), aber etwas größer als die Summe des Durchmessers des mit Gewinde versehenen unteren Endes des ersten Klemmenteils (15) plus der seitlichen Versetzung ist, an dem Boden der Bohrung des zweiten Klemmenteils (16) vorgesehen ist, durch das die innere Lageroberfläche gebildet wird, um eine Trennung des ersten und zweiten Klemmenteils (15, 16) zu verhindern, wenn sie mit dem unteren Ende (15A) des in einer Fassung (17) gehaltenen ersten Klemmenteils (15) zusammengefügt werden, und um eine Bewegung des zweiten Klemmenteils (16) aufzunehmen, ohne zu blockieren,
   - daß entweder die äußere Lageroberfläche (15C) oder die innere Lageroberfläche (16G) oder beide eine Rotationsfläche haben, die zu der Mittelachse (19) des Abschnitts, der die äußere Lagerfläche (15C) aufweist, im wesentlichen konzentrisch ist, und

- daß das erste Klemmenteil (15) ferner Oberflächen (15D) hat, die so geformt und angeordnet sind, daß sie zusammenwirkend und lösbar mit einem ein Drehmoment ausübenden Werkzeug zusammenpassen, so daß es mit einer Winkeleinstellung der Ausrichtung der äußeren Lageroberfläche (15C) des ersten Klemmenteils (15) auf eine Winkelbewegung des Werkzeugs reagiert.

2. Klemme mit Orbitalfunktion nach Anspruch 1, bei welcher die Rotationsfläche (33C) im wesentlichen Kegelstumpfform hat und sich vom größeren zum kleineren Durchmesser in Richtung nach unten entlang der Drehachse (21) verjüngt, wodurch das zweite Klemmenteil (16) daran gehindert wird, sich von dem ersten Klemmenteil (15) zu trennen, wenn sie zusammengefügt werden, wenn das erste Klemmenteil (15) in der Fassung (17) gehalten ist.

3. Klemme mit Orbitalfunktion nach Anspruch 1, bei welcher das untere Ende (15A) des ersten Klemmenteils (15) mit einem Außengewinde für eine Halterung innerhalb einer mit einem Gewinde versehenen Öffnung (17A) in der Fassung (17) versehen ist, und das untere Ende (15A) einstückig mit dem exzentrischen Abschnitt (15B) des ersten Klemmenteils (15) ausgebildet ist und einen kleineren Durchmesser als dieser hat.

4. Klemme mit Orbitalfunktion nach Anspruch 1, bei welcher das obere Ende des exzentrischen Abschnitts (15B) einen Innensechskant (33B) aufweist, der für die Aufnahme eines Sechskantstiftschlüssels ausgebildet ist.

5. Klemme mit Orbitalfunktion nach Anspruch 4, bei welcher das erste Klemmenteil (15) eine Innensechskantkopfschraube mit Halbrundkopf (33B) aufweist, von deren Kopf Material entfernt wurde, um den exzentrischen Abschnitt (15B) zu bilden.

6. Klemme mit Orbitalfunktion nach Anspruch 1, bei welcher das untere Ende (15A) des ersten Klemmenteils (15) an der Drehachse (21) befestigt und im Winkel um die Drehachse (21) bezüglich eines T-Nutensteins (32) einstellbar ist, der in einer T-Nut (31) einer Fassung in Form eines mit einer T-Nut versehenen Maschinentisches verschiebbar ist, und damit eine Arretierung bildet.

FIG.1
FIG.2 FIG.3
FIG.4
FIG.5
FIG.6
FIG.7

EP 0 236 537 B1

**FIG. 8**

27
28
17B
16
15B
17
24

**FIG. 10**

32D
32
32B

**FIG. 9**

18
16
15
32A
32
31
30

**FIG. 11**

20
333
33C
33
33A
34G
34
20

**FIG. 13**

36D
36
36C
36B

**FIG. 12**

35
15B
35A
35B
17
15A

10